# EUROPÄISCHE PATENTSCHRIFT

(11) **EP 3 613 293 B1**
(45) Veröffentlichungstag und Bekanntmachung des Hinweises auf die Patenterteilung: **24.01.2024**
(21) Anmeldenummer: 19189122.5
(22) Anmeldetag: 30.07.2019
(51) Int. Cl.: A22C 11/00, B65B 19/34, B65G 47/52, B65G 43/08, B65G 47/84

(54) **WURSTBEHANDLUNGSVORRICHTUNG UND -VERFAHREN**
SAUSAGE TREATMENT DEVICE AND METHOD
DISPOSITIF ET PROCÉDÉ DE TRAITEMENT DE SAUCISSES

(30) Priorität: 22.08.2018 DE 102018120507
(43) Veröffentlichungstag der Anmeldung: 26.02.2020
(73) Patentinhaber: Singer & Sohn GmbH, 92334 Berching (DE)
(72) Erfinder: Singer, Manfred, 92334 Berching (DE); Koller, Dieter, 92360 Mühlhausen (DE)
(74) Vertreter: Lindner Blaumeier Patent- und Rechtsanwälte

(56) Entgegenhaltungen:
- DE-U1-202015 104 994
- US-A- 4 211 055
- US-A- 6 141 943
- US-A1- 2007 045 083
- US-A1- 2016 297 619

## Beschreibung

Die Erfindung betrifft eine Wurstbehandlungsvorrichtung.

Würste, die üblicherweise aus einer Wursthülle und darin eingefüllten Wurstmasse oder Wurstbrät bestehen, werden in großer Anzahl maschinell hergestellt. Hierzu wird in einer Befüllvorrichtung die Wurstmasse oder das Wurstbrät in die Wursthülle eingebracht, wonach die einzelnen Würste abgedreht, vereinzelt und anschließend sortiert bzw. ausgerichtet werden, um schließlich mit einer entsprechenden Übergabevorrichtung, beispielsweise einer Greifeinrichtung, gegriffen und beispielsweise in eine Verpackungs- oder Transportschalle versetzt zu werden. Ein Beispiel für eine solche Vorrichtung zur Behandlung von Würsten ist in DE 20 2015 104 994 U1 gezeigt. Die dort beschriebene Wurstbehandlungsvorrichtung umfasst neben einer der Befüll- und Abdreheinrichtung nachgeschalteten Sortiereinrichtung eine umlaufende erste Transport- oder Fördereinrichtung in Form eines Stollenbandes, der eine Gruppiereinrichtung, in der die von der ersten Fördereinrichtung antransportierten Würste zu einer Gruppe zusammengefasst werden, nachgeschaltet ist. Dieser Gruppiereinrichtung folgt eine zweite Fördereinrichtung, auf die die Würste nebeneinanderliegend und gruppenweise von der Gruppiereinrichtung übergeben werden, sodass auf dieser zweiten Transport- oder Fördereinrichtung die beabstandeten Wurstgruppen nacheinander aufgenommen sind und gefördert werden können. Dieser zweiten Transport- oder Fördereinrichtung ist schließlich eine Transfereinrichtung in Form einer Greifeinrichtung zum Greifen einer Wurstgruppe und Übergeben und Einlegen der Wurstgruppe in ein Aufnahmebehältnis oder ähnliches nachgeschaltet.

Die dort beschriebene Gruppiereinrichtung dient wie beschrieben dazu, eine, eine definierte Anzahl an Würsten umfassende, Wurstgruppe zu bilden, die auf die zweite Transport- oder Fördereinrichtung übergeben wird, so dass mittels der Gruppiereinrichtung einzelne, voreinander beabstandete Wurstgruppen gebildet werden, die auf der zweiten Transport- oder Fördereinrichtung um mehrere Zentimeter beabstandet angeordnet sind. Die Gruppiereinrichtung weist zwei um dieselbe Achse drehbare, hintereinander geschaltete und separat antreibbare Trommeln auf, wobei jede Trommel eine entsprechende Anzahl an Würsten aufnimmt, entsprechend der Gruppengröße, und, wenn die Trommel in die Übergabeposition gedreht ist, die Trommel die Würste dann als Wurstgruppe abgibt. Aufgrund der zwei Trommeln ist es demzufolge möglich, bei einer 360 Grad Rotation mit dieser Trommeleinheit zwei Wurstgruppen zu bilden.

Wenngleich sich mit einer solchen Gruppiereinrichtung sehr exakt und fortlaufend die definierten Wurstgruppen bilden lassen, ist gleichwohl ein Verbesserungsbedarf gegeben. Neben dem Umstand, dass die Konfiguration der Trommeleinheit aufwendig ist, hat die Gruppenbildung und das beabstandete Aufbringen einzelner Gruppen auf die zweite Transport- oder Fördereinrichtung auch einen Einfluss auf den Durchsatz und begrenzt diesen. Eine Wurstbehandlungsvorrichtung mit gesteigertem Durchsatz ist daher wünschenswert, zumal eine nachgeschaltete Transfer- oder Greifeinrichtung nicht zwingend die Bildung von Wurstgruppen erfordert.

Der Erfindung liegt das Problem zu Grunde, eine demgegenüber verbesserte Wurstbehandlungsvorrichtung anzugeben.

Zur Lösung des Problems ist erfindungsgemäß eine Wurstbehandlungsvorrichtung vorgesehen, umfassend eine umlaufende erste Transporteinrichtung in Form eines Stollenbands, wobei in jedem Stollen eine Wurst aufnehmbar ist, eine nachgeschaltete Stollenrolle, wobei jeweils eine Wurst aus einem Stollen der ersten Transporteinrichtung in einen Stollen der Stollenrolle übergebbar ist, sowie eine zweite umlaufende Transporteinrichtung, auf die die Würste aus den Stollen der Stollenrolle übergebbar sind, eine den Förderbetrieb der ersten und zweiten Transporteinrichtung und der Stollenrolle steuernde Steuerungseinrichtung, sowie eine Sensoreinrichtung zur Erfassung der Belegung der Stollen der ersten Transporteinrichtung, wobei die Steuerungseinrichtung zur Steuerung des Förderbetriebs der Stollenrolle und der zweiten Transporteinrichtung derart in Abhängigkeit des Erfassungsergebnisses der Sensoreinrichtung eingerichtet ist, dass bei Erfassung eines oder mehrerer aufeinander folgender nicht belegter Stollen der ersten Transporteinrichtung der Förderbetrieb der Stollenrolle und der zweiten Transporteinrichtung gestoppt oder verzögert wird, wenn sich der nicht belegte Stollen in einer Übergabeposition befindet oder in diese einläuft, und bei Erfassung eines belegten Stollens wieder aufgenommen wird, wenn sich der belegte Stollen in der Übergabeposition befindet oder in diese einläuft.

Die erfindungsgemäße Wurstbehandlungsvorrichtung umfasst eine erste und eine zweite Transporteinrichtung, wobei zumindest die erste Transporteinrichtung als Stollenband ausgeführt ist, auch die zweite Transporteinrichtung kann als Stollenband ausgeführt sein, aber auch als einfaches Förderband. Zwischen den beiden Transporteinrichtungen bzw. bevorzugt den beiden Stollenbändern ist eine Stollenrolle geschaltet, die als Transfereinrichtung dient, um die Würste von der ersten auf die zweite Transporteinrichtung, also bevorzugt vom ersten Stollenband auf das zweite Stollenband zu übergeben. In jedem Stollen des ersten Stollenbands ist genau eine Wurst aufnehmbar, ebenso in jedem Stollen der Stollenrolle.

Erfindungsgemäß ist eine Sensoreinrichtung vorgesehen, die dazu dient, die Belegung der einzelnen Stollen der ersten Transporteinrichtung zu erfassen, um so festzustellen, ob in dem jeweils daran vorbeilaufenden Stollen eine Wurst aufgenommen ist oder nicht. Diese Sensoreinrichtung kommuniziert mit einer Steuerungseinrichtung, die den Förderbetrieb der Stollenrolle und zumindest der zweiten Transporteinrichtung, gegebenenfalls auch der ersten Transporteinrichtung steuert. Die Steuerungseinrichtung ist derart eingerichtet, dass sie hinsichtlich der Steuerung des Förderbetriebs der Stollenrolle und der zweiten Transporteinrichtung auf sich wechselnde Belegungen der Stollen der ersten Transporteinrichtung derart reagieren kann, dass die Steuerrolle und die zweite Transporteinrichtung gestoppt oder in der Transportgeschwindigkeit verlangsamt werden, wenn ein nicht in einer Wurst belegter Stollen in einen Übergabebereich einläuft oder sich in diesem befindet, mithin also keine Wurst in einen Stollen der Stollenrolle übergeben werden kann. Da die erste Transporteinrichtung kontinuierlich weiterfördert, und kurze Zeit nach Durchlauf eines unbelegten Stollens erneut ein belegter Stollen in den Bereich der

Übergabeposition einläuft oder sich in diesem befindet, wird seitens der Steuereinrichtung der Förderbetrieb der Stollenrolle und der zweiten Transporteinrichtung wieder aufgenommen, indem die Stollenrolle und die zweite Transporteinrichtung wieder anlaufen oder wieder auf die Soll-Geschwindigkeit beschleunigt werden. Die Übergabe wird fortgesetzt, bis es aufgrund eines unbelegten Stollens erneut zu einem Stopp oder einer Verzögerung der Stollenrolle und der zweiten Transporteinrichtung kommt, etc. Dieser intermittierende, von der tatsächlichen Belegung der Stollen des ersten Stollenbands abhängige Arbeitsbetrieb oder Förderbetrieb der Stollenrolle und der zweiten Transporteinrichtung erlaubt es mit besonderem Vorteil, die an transportierten Würste respektive die Wurstabfolge dahingehend zu verdichten, als in der Stollenrolle jeder einzelne Stollen belegt wird, folglich etwaige Lücken in der Wurstabfolge geschlossen respektive egalisiert werden und auf die zweite Transporteinrichtung eine fortlaufende, lückenfrei Wurstreihe übergeben werden kann. Es ist demzufolge eine Egalisiereinrichtung angegeben, die die Bildung einer fortlaufenden Wurstreihe ermöglicht, ausgehend von der eher zufälligen Aufgabe der Würste auf die erste Transporteinrichtung, verbunden mit einer ungleichmäßigen Wurstabfolge.

Die erfindungsgemäße Wurstbehandlungsvorrichtung weist demzufolge nur eine sehr einfach konzipierte Stollenrolle auf, bei der es sich um ein Metallbauteil, vorzugsweise aus Edelstahl, mit an der Außenseite ausgebildeten Stollen handeln kann, aber auch um ein Kunststoffbauteil, vorzugsweise aus PTFE, PE, PP oder POM. Eine aufwändig konzipierte Gruppiereinrichtung ist nicht vorgesehen, nachdem bei der erfindungsgemäßen Wurstbehandlungsvorrichtung gerade keine Gruppierung, sondern eine fortlaufende Reihe bzw. geschlossene Reihenbildung erfolgt. Diese Reihenbildung ist hinsichtlich einer Durchsatzerhöhung von Vorteil, da das Schließen der Lücken deutlich schneller von statten geht als das Bilden einzelner Wurstgruppen, mit der Befüllung der einzelnen Trommel etc., wie im Stand der Technik vorgesehen. Denn erfindungsgemäß kommt es zum Egalisieren einer Lücke nur zu einem äußerst kurzen Stopp bzw. zu einer sehr kurzen Verzögerung des Förderbetriebs der Stollenrolle und der zweiten Fördereinrichtung, was im Hinblick auf die hohe Transportgeschwindigkeit der ersten Transporteinrichtung und den Umstand, dass ein Durchsatz von mehreren einhundert Würsten pro Minute gefahren wird, im Bereich von nur wenigen zehn oder hundert Millisekunde liegt, je nachdem, wie groß die zu schließende Lücke ist. Neben der Vereinfachung im Aufbau geht damit bei der erfindungsgemäßen Wurstbehandlungseinrichtung auch eine Erhöhung des Durchsatzes einher.

Wie beschrieben ist auch als zweite Transporteinrichtung bevorzugt ein Stollenband vorgesehen, wobei in jeden Stollen eine Wurst aus einem Stollen der Stollenrolle übergebbar ist. Alternativ kann diese Stollenband auch größere Stollen aufweisen, so dass mehrere Würste aus mehreren Stollen der Stollenrolle in einen Stollen dieses zweiten Stollenbands übergebbar sind. Alternativ zur Verwendung eines solchen Stollenbands kann die zweite Transporteinrichtung auch mit Schalen oder ähnlichem versehen sein, in die die Würste aus der Stollenrolle abgelegt werden.

Für eine einfache Übergabe der Würste von der ersten Transporteinrichtung auf die Stollenrolle und von dieser auf die zweite Transporteinrichtung ist es zweckmäßig, wenn die Stollenrolle unterhalb des Endes des ersten Stollenbands und der Anfang der zweiten Transporteinrichtung, insbesondere des zweiten Stollenbands unterhalb der Stollenrolle ist, wobei eine das Ende des ersten Stollenbands umgreifende und sich in den Bereich der oberen Übergabeposition erstreckende erste Führungseinrichtung und eine die Stollenrolle im Bereich zwischen der oberen Übergabeposition und der unteren Übergabeposition von der Stollenrolle zur zweiten Transporteinrichtung, insbesondere dem zweiten Stollenband umgreifende zweite Führungseinrichtung vorgesehen ist. Durch diese Anordnung der beteiligten Komponenten übereinander ist ein einfaches Übergeben möglich, da die Würste schwerkraftbedingt aus dem einen Stollen in den anderen fallen können, respektive von der ersten Transporteinrichtung auf das Stollenrad und von diesem auf die zweite Transporteinrichtung. Da es sich bei allen beteiligten Komponenten im relevanten Bereich um umlaufende Komponenten bzw. Abschnitte handelt, nachdem am Ende des ersten Stollenbands dieses umgelenkt wird und von dort die Würste auf die zwangsläufig runde Stollenrolle fallen, von der in deren unteren Bereich wiederum die Würste auf die umlaufende zweite Transporteinrichtung abgegeben werden, ist eine exakte Führung der Würste in diesen beiden Übergabebereichen erforderlich. Hierfür sind zwei entsprechend ausgebildete, der rundlichen Form der dortigen Transportstrecke entsprechenden Führungseinrichtungen in Form geeigneter Führungs- oder Leitbleche oder -schienen oder dergleichen vorgesehen, die die Würste in den entsprechenden, gebogenen und nach unten laufenden Transportstrecken führen. Über diese Führungseinrichtungen wird ein Herausfallen der Würste oder eine unkorrekte Übergabe vorteilhaft ausgeschlossen.

Eines der zentralen Elemente ist die Sensoreinrichtung, die der Erfassung der Belegung der einzelnen Stollen des ersten Stollenbands dient. Diese Sensoreinrichtung ist zweckmäßiger Weise vor der Übergabeposition angeordnet. Sie kann entweder unmittelbar vor der Übergabeposition angeordnet sein, bevorzugt befindet sie sich jedoch, gesehen längs der Transportstrecke der ersten Transporteinrichtung, ein Stück weit vorgesetzt. Da die exakte Position der positionsfesten Sensoreinrichtung wie auch die Länge der Transportstrecke bis zum Erreichen der Übergabeposition sowie die Fördergeschwindigkeit des ersten Stollenbands bekannt ist, kann die Steuerungseinrichtung gestützt auf diese Parameter äußerst exakt den genauen Zeitpunkt ermitteln, zu dem bei Erfassung eines nicht belegten Stollens dieser in die Übergabeposition einläuft und dem zufolge auch exakt den Zeitpunkt zu bestimmen, zu dem die Stollenrolle sowie die zweite Transporteinrichtung zu stoppen oder zu verzögern sind. Auf diese Weise kann eine hochgenaue Steuerung des Förderbetriebs der Stollenrolle sowie der zweiten Transporteinrichtung erfolgen, so dass stets eine exakte Positionierungsgenauigkeit gegeben ist. Die erste Transporteinrichtung, die Stollenrolle sowie die zweite Transporteinrichtung sind zwangsläufig hinsichtlich der Fördergeschwindigkeit exakt synchronisiert, so dass stets der Positionsbezug der einzelnen Stollen zueinander gegeben ist, um eine exakte Wurstübergabe sicherzustellen. Etwaige sich im Laufe des Betriebs ergebende Ungleichförmigkeiten können steuerungstechnisch durch eine entsprechende Erfassung von Stollenpositionen oder sonstigen Markierungen an den entsprechenden Komponenten, die einen Rückschluss auf die Positionierung der Komponenten, also der Transporteinrichtungen und der Stollenrolle zueinander ermöglichen, während des Betriebs durch eine entsprechende Anpassung der einzelnen Transportgeschwindigkeiten zur Rekalibrierung ausgeglichen werden.

Als Sensoreinrichtung wird bevorzugt ein lichtoptischer Sensor verwendet, also eine Lichtschranke, die von einer im Stollen befindlichen Wurst betätigt wird, und die nicht betätigt wird, wenn sich keine Wurst im Stollen befindet. Die Sensoreinrichtung kann seitlich am ersten Stollenband angeordnet sein, so dass die Erfassung quasi längs durch den Stollen und damit quer zur Transportrichtung erfolgt. Sie kann alternativ aber auch oberhalb des Stollenbandes angeordnet sein und den Stollen von oben nach unten (oder umgekehrt) durchleuchten. Alternativ kann auch eine Kamera mit zugeordneter Bildauswertung oder ein mechanischer Tastsensor oder ein kapazitiver Sensor verwendet werden.

Neben der Wurstbehandlungsvorrichtung selbst betrifft die Erfindung ferner ein Verfahren zum Handhaben von Würsten und Verwendung einer Wurstbehandlungsvorrichtung der vorstehend beschriebenen Art. Dieses Verfahren zeichnet sich dadurch aus, dass bei Erfassung eines oder mehrerer aufeinander folgender nicht belegter Stollen der ersten Transporteinrichtung der Förderbetrieb der Stollenrolle und der zweiten Transporteinrichtung gestoppt oder verzögert wird, wenn sich der nicht belegte Stollen in einer Übergabeposition befindet bzw. in diese einläuft, und der bei Erfassung eines belegten Stollens wieder aufgenommen wird, wenn sich der belegte Stollen in der Übergabeposition befindet bzw. in diese einläuft. Dies führt im Ergebnis dazu, dass jeder Stollen der Stollenrolle zwischen der Aufnahmeposition, also der Übergabeposition, nahe der ersten Transporteinrichtung und die Abgabeposition nahe der zweiten Transporteinrichtung mit einer Wurst belegt ist und die Würste von der Stollenrolle in einer lückenlosen Reihe auf die zweite Transporteinrichtung übergeben werden können. Handelt es sich bei der zweiten Transporteinrichtung ebenfalls um ein Stollenband, so ist es demzufolge möglich, dass in jeden Stollen dieses zweiten Stollenbands eine Wurst aus einem Stollen der Stollenrolle übergeben wird, mithin also auch dort jeder Stollen belegt ist. Handelt es sich um größere Stollen, die mehrere Würste aufnehmen, so werden von der Stollenrolle diese mehreren Würste lückenfrei übergeben.

Die Erfassung der Stollenbelegung mittels der Sensoreinrichtung erfolgt bevorzugt an einer der Übergabeposition vorgelagerten Position, wobei die Steuerungseinrichtung bei Erfassung eines nicht belegten Stollens den Stoppzeitpunkt bzw. den Verzögerungszeitpunkt in Abhängigkeit der Fördergeschwindigkeit der ersten Transportstrecke bestimmt. Da die erste Transportstrecke mit konstanter Geschwindigkeit läuft und die Strecke von der positionsfesten Sensoreinrichtung bis zur Übergabeposition bekannt ist, kann demzufolge die Steuerungseinrichtung gestützt auf diese Parameter hochgenau den Stoppzeit- oder Verzögerungspunkt ermitteln. Da auch kontinuierlich nach einem unbelegten Stollen ein etwaige zweiter oder dritter, unmittelbar folgender unbelegter Stollen über die Sensoreinrichtung erfasst wird, kann die Steuerungseinrichtung des Weiteren auch exakt ermitteln, wie lange im Fall einer solchen größeren Lücke die Stollenrolle sowie die zweite Transporteinrichtung gestoppt sein müssen bzw. wie lange zu verzögern ist bzw. welche Verzögerungsgeschwindigkeit einzustellen ist, bis erneut ein belegter Stollen in die Übergabeposition einläuft und die Stollenrolle, sowie die zweite Fördereinrichtung wieder in Betrieb gesetzt werden bzw. auf die Soll-Geschwindigkeit beschleunigt werden.

Zweckmäßigerweise werden die Würste von dem ersten Stollenband auf die unterhalb des Endes des ersten Stollenbands angeordnete Stollenrolle übergeben und anschließend die Würste von der Stollenrolle auf den unterhalb davon angeordneten Anfang der zweiten Transporteinrichtung, insbesondere des zweiten Stollenbands übergeben, wobei die Würste mittels einer das Ende des ersten Stollenbands umgreifenden und sich in den Bereich der oberen Übergabepositionen erstreckenden ersten Führungseinrichtung und einer die Stollenrolle im Bereich zwischen der oberen Übergabeposition und der unteren Übergabeposition von der Stollenrolle zur zweiten Transporteinrichtung, insbesondere dem zweiten Stollenband umgreifenden zweiten Führungseinrichtung geführt werden. Hierüber ist ein sicherer Transport respektive eine sichere Führung auch in den entsprechenden Umlenkbereichen sichergestellt.

Die Stollenbelegung selbst wird zweckmäßigerweise mittels eines lichtoptischen Sensors, der mit der Steuerungseinrichtung kommuniziert, erfasst. Alternativ können auch die anderen vorstehend genannten Sensortypen verwendet werden.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: eine Prinzipdarstellung einer erfindungsgemäßen Wurstbehandlungsvorrichtung, und
- Fig. 2 - 13: Darstellungen der Wurstbehandlungsvorrichtung aus Fig. 1 in fortschreitenden Transportsituationen zur Erläuterung der Arbeitsweise der Wurstbehandlungsvorrichtung.

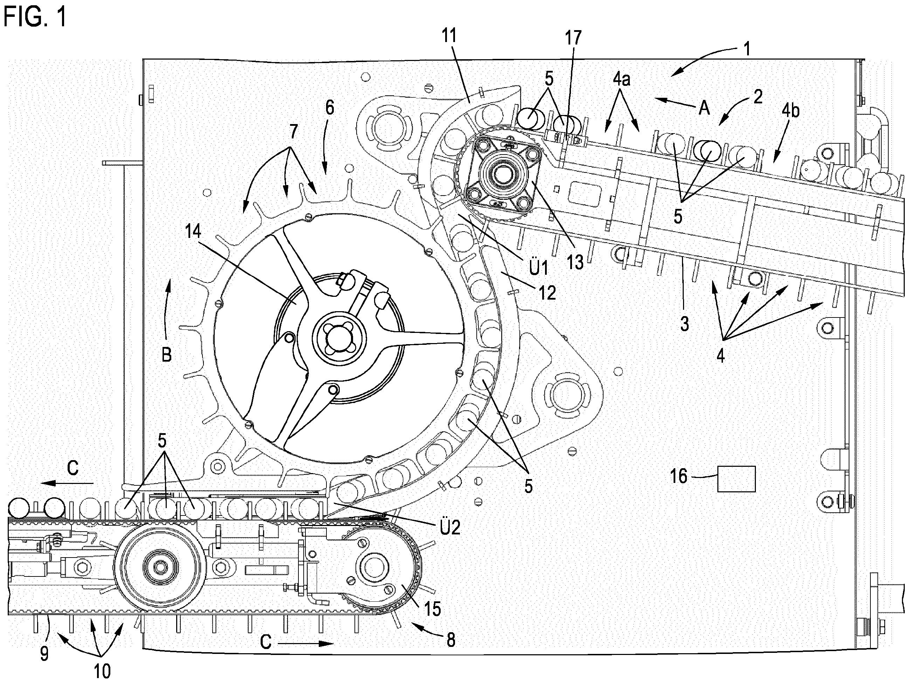

Fig. 1 zeigt eine erfindungsgemäße Wurstbehandlungsvorrichtung 1, umfassend eine erste Transporteinrichtung 2 in Form eines Stollenbandes 3 mit einer Vielzahl einzelner Stollen 4, wobei zumindest in einem Teil der Stollen 4 Würste 5 aufgenommen sind. In jeden Stollen 4 ist exakt eine Wurst 5 einbringbar.

Vorgesehen ist des Weiteren eine Stollenrolle 6, die im Bereich des umgelenkten Endes der ersten Transporteinrichtung 2 unterhalb dieser angeordnet ist. Die Stollenrolle 6 weist ebenfalls eine Vielzahl einzelner Stollen 7 auf, die an der Außenseite der Stollenrolle 6 ausgebildet sind.

Unterhalb der Stollenrolle 6 schließlich ist eine zweite Transporteinrichtung 8, auch hier bevorzugt in Form eines Stollenbands 9, mit einer Vielzahl einzelner Stollen 10 angeordnet, wobei dieses Stollenband 9, wie auch das Stollenband 3, umläuft, also ein Endlosband ist. Auch hier wird im gezeigten Ausführungsbeispiel in jeden Stollen 10 exakt eine Wurst 5 eingebracht.

Im Betrieb sind idealerweise alle drei Komponenten, also die erste Transporteinrichtung 2, die Stollenrolle 6 sowie die zweite Transporteinrichtung 8 angetrieben, wie durch die Bewegungspfeile A, B und C angedeutet ist. Der Pfeil A deutet die umlaufende Bewegung des Stollenbands 3 an, dieses fördert die Würste in Richtung des Pfeils A. Der Pfeil B zeigt die Rotation der Stollenrolle 6 in Pfeilrichtung an. Der Pfeil C zeigt schließlich den umlaufenden Förderbetrieb des zweiten Stollenbands 9 an, wobei der Wursttransport in Richtung des Pfeils C erfolgt.

Der ersten Transporteinrichtung 2 ist eine Führungseinrichtung 11 zugeordnet, die das Stollenband im Bereich der Umlenkung umgreift. Diese Führungseinrichtung 11 erstreckt sich bis in den Bereich einer Übergabeposition Ü1, wo eine Wurst 5 von dem ersten Stollenband 3 auf die Stollenrolle 6 übergeben wird. Die erste Führungseinrichtung 11 dient dazu, ein Herausfallen der Würste 5 vor Erreichen der Übergabeposition Ü1 zu verhindern. Bei der Führungseinrichtung 11 handelt es sich beispielsweise um ein Führungsblech oder um mehrere parallel verlaufende gebogene Streben oder ähnliches.

Auch der Stollenrolle 6 ist eine zweite Führungseinrichtung 12 zugeordnet, die ebenfalls bogenförmig die Stollenrolle 6 abschnittsweise umgreift und die auch der Verhinderung eines Herausfallens der, wie Fig. 1 zeigt, nach unten geförderten Würste 5 dient. Die zweite Führungseinrichtung 12, ebenfalls ein Blech oder Streben oder ähnliches, erstreckt sich von dem Bereich der ersten Übergabeposition Ü1 bis in den Bereich einer zweite Übergabeposition Ü2, wo die Würste 5 von dem Stollenrad 6 auf die zweite Transporteinrichtung 8 übergeben werden.

Zum Antrieb der ersten Transporteinrichtung 2, des Stollenrads 6 sowie der zweiten Transporteinrichtung 8 sind entsprechende Antriebsmotoren 13, 14, 15 vorgesehen, die gemeinsam über eine in Fig. 1 nur schematisch angedeutete Steuerungseinrichtung 16 gesteuert werden. Die Steuerungseinrichtung 16 ist dabei in der Lage, den Betrieb aller Antriebsmotoren 13, 14, 15 und damit den Förderbetrieb und die Geschwindigkeiten sowohl der ersten Transporteinrichtung 2 als auch der Stollenrolle 6 und der zweiten Fördereinrichtung 8 separat und individuell zu steuern. Die einzelnen Fördergeschwindigkeiten sind synchronisiert und exakt einzuhalten, nachdem die Stollen 4, 7 und 10 stets eine exakte Lagebeziehung zueinander einhalten müssen, da die Würste 5 von dem einen Stollen in den anderen übergeben werden, und demzufolge die Stollen exakt zueinander hinbewegt werden müssen, so dass die Würste 5 in die Stollen einfallen können.

Wie Fig. 1 ersichtlich zeigt, werden die Würste 5 an der ersten Übergabeposition Ü1 aus einem Stollen 4 des ersten Stollenbands 3 in einen Stollen 7 der Stollenrolle 6 übergeben. An der zweiten Übergabeposition Ü2 werden die Würste aus dem Stollen 7 in einen Stollen 10 des zweiten Stollenbands 9 übergeben. Sofern jeder Stollen 4 auf dem ersten Stollenband 3 mit einer Wurst 5 belegt ist, ergibt sich eine fortlaufende Stollenbelegung auch am Stollenrad 6 sowie am zweiten Stollenband 9, mithin also eine geschlossene Wurstreihe. Ist jedoch ein oder sind mehrere einander nachfolgende Stollen 4 am ersten Stollenband 3 nicht belegt, so ist die erfindungsgemäße Wurstbehandlungsvorrichtung 1 in der Lage, diese Lücke zu schließen, so dass sowohl am der Stollenrolle 6 jeder Stollen 7 als auch am zweiten Stollenband 9 jeder Stollen 10 belegt ist.

Zur Erfassung der Stollenbelegung am ersten Stollenband 3 dient eine Sensoreinrichtung 17, bevorzugt in Form eines lichtoptischen Sensors, also eine Lichtschranke. Diese Sensoreinrichtung 17 ist positionsfest seitlich des ersten Stollenbands 3 angeordnet, so dass der Messstrahl den jeweiligen Stollen 4 in Stollenlängsrichtung, also quer zur Transporteinrichtung A, durchstrahlt. Der Lichtstrahl wird von jeder in einem Stollen 4 befindlichen Wurst 5 unterbrochen. Bei einer nicht Belegung wird der Lichtstrahl nicht unterbrochen. Aufgrund der Kenntnis der Transportgeschwindigkeit des ersten Stollenbands 3 kann nun die Steuerungseinrichtung 16, die mit der Sensoreinrichtung 17 kommuniziert, aus der Signalfolge, die die Sensoreinrichtung 17 gibt, exakt erfassen, ob ein Stollen 4 belegt ist oder nicht. Ist ein nicht belegter Stollen 4 erfasst worden, so wird dies also an der Steuerungseinrichtung 16 registriert. Diese ist nur derart eingerichtet, sowohl die Stollenrolle 6 als auch das zweite Stollenband 9 dann zu stoppen oder zu verzögern, wenn ein solcher nicht belegter Stollen 4 in die Übergabeposition Ü1 einläuft respektive sich in dieser befindet. In dieser Situation stehen sich quasi zwei unbelegte Stollen, nämlich der unbelegte Stollen 4 und ein unbelegte Stollen 7 gegenüber, eine Wurstübergabe ist zwangsläufig nicht möglich. Das erste Stollenband 3 läuft weiter, die Stollenrolle 6 sowie das zweite Stollenband 9 ruhen oder bewegen sich verlangsamt weiter. Erst wenn erneut ein belegter Stollen 4 in dem Bereich der Übergabeposition Ü1 einläuft respektive sich dort befindet und eine Wurst 5 aus dem belegten Stollen 4 in den noch unbelegten Stollen 7 einfällt, wird der Förderbetrieb der Stollenrolle 6 und des zweiten Stollenbands 9 wiederaufgenommen und setzt sich synchron zum Förderbetrieb des ersten Stollenbands fort. Die Stollenrolle 6 und das zweite Stollenband 9 laufen also wieder an oder werden wieder auf die Soll-Geschwindigkeit beschleunigt.

In Fig. 1 ist exemplarisch eine nur teilweise Belegung der Stollen 4 am ersten Stollenband 3 gezeigt. Exemplarisch sind die beiden Stollen 4a und der eine Stollen 4b nicht belegt, während die benachbarten Stollen 4 mit jeweils eine Wurst belegt sind.

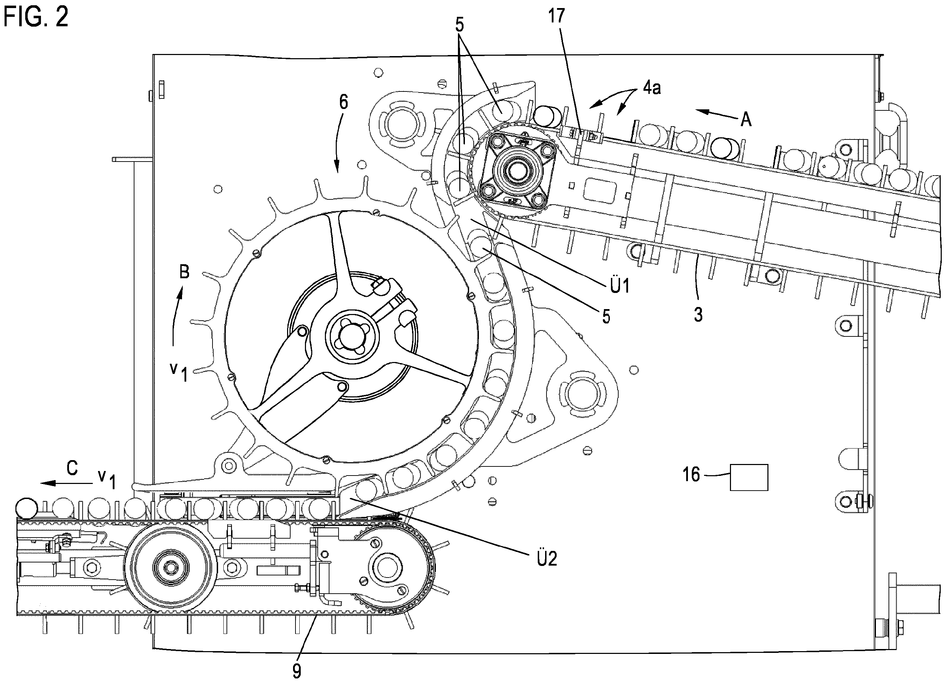

In der Situation gemäß Fig. 1 befindet sich im Bereich der Sensoreinrichtung 17 ein belegter Stollen 4 mit einer Wurst 5, unmittelbar danach folgt der erste der beiden unbelegten Stollen 4a. Das erste Stollenband 3, die Stollenrolle 6 und das zweite Stollenband 9 laufen mit der jeweiligen Soll-Geschwindigkeit. Die Figuren 2-13 zeigen nun schrittweise den weiteren Förderbetrieb der einzelnen Komponenten. Es wird nachfolgend ein Betrieb mit einer Verzögerung der Fördergeschwindigkeit der Stollenrolle 6 und der zweiten Transporteinrichtung 8 beschrieben.

In der Ansicht gemäß Fig. 2 ist der erste unbelegte Stollen 4a in den Bereich der Sensoreinrichtung 17 eingelaufen, die Steuerungseinrichtung 16 registriert diesen unbelegten Stollen. Anhand der bekannten Fördergeschwindigkeit des ersten Stollenbands 3, der Position der Sensoreinrichtung 17 und damit der Länge der Transportstrecke bis zur Übergabeposition Ü1 kann nun die Steuerungseinrichtung 16 exakt bestimmen, wann diese unbelegte Stollen 4a in die Übergabeposition Ü1 einläuft.

Mit dem ersten Stollenband 3 bewegt sich zwangsläufig auch die Stollenrolle 6 sowie das zweite Stollenband 9 kontinuierlich weiter, nachdem, gesehen von der Übergabeposition Ü1 bis zum ersten belegten Stollen 4a, alle dazwischen befindlichen Stollen 4 jeweils mit einer Wurst 5 belegt sind und in der in Figur 2 gezeigten Situation gerade eine Wurst 5 im Übergabebereich Ü1 von dem Stollen 4 in einem Stollen 7 übergeben wird.

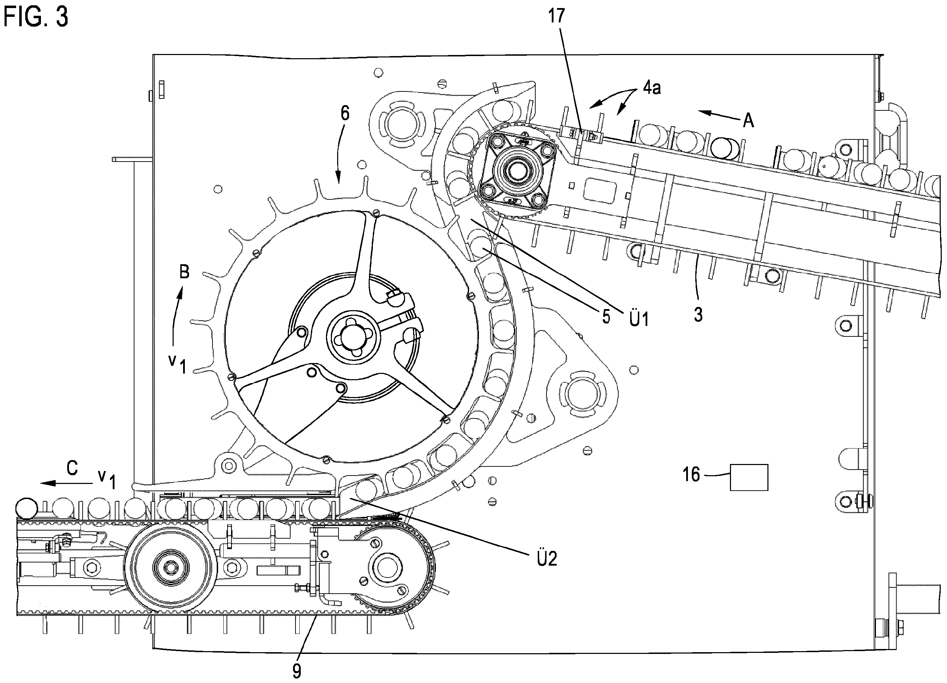

In Fig. 3 ist der zweite unbelegte Stollen 4a in den Bereich der Sensoreinrichtung 17 gefahren, wiederum erfasst die Steuereinrichtung 16 diesen zweiten unbelegten Stollen 4a und ist demzufolge in der Lage, die Dauer, während welche die Stollenrolle 6 sowie das zweite Stollenband 9 insgesamt verzögert werden müssen, sowie die Verzögerungsgeschwindigkeit zu bestimmen.

Der Übergabebetrieb setzt sich nach wie vor fort, da immer noch zwischen der Übergabeposition Ü1 und dem ersten unbelegten Stollen 4a belegte Stollen 4 vorhanden sind, das heißt, dass die Stollenrolle 6 nach wie vor mit der Soll-Geschwindigkeit rotiert und auch das zweite Stollenband 9 nach wie vor mit der Soll-Geschwindigkeit fördert und demzufolge kontinuierliche Übergaben an den Übergabeposition Ü1 und Ü2 stattfinden.

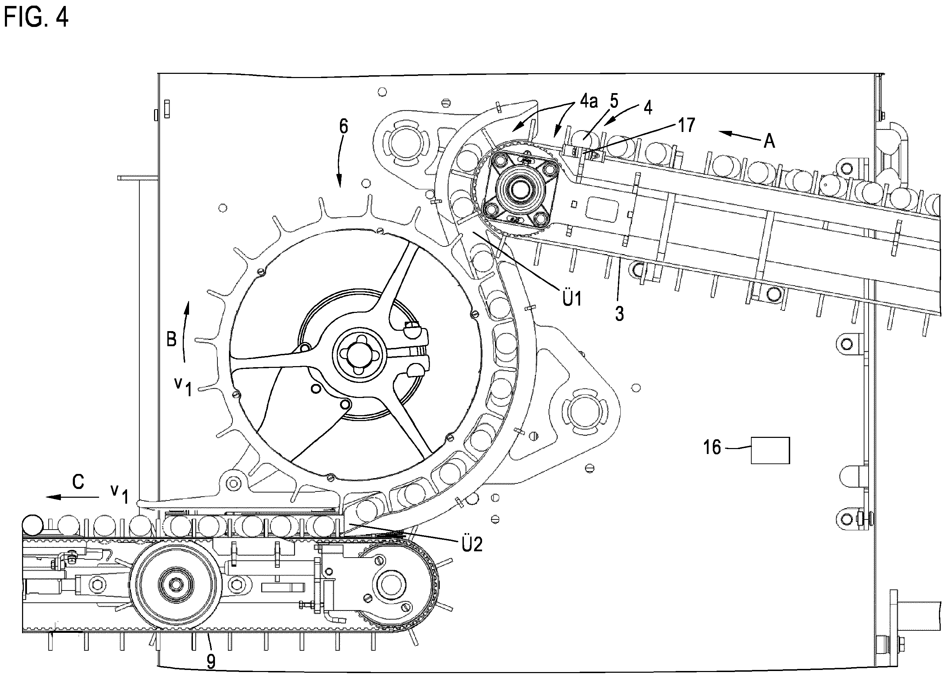

Fig. 4 zeigt die Situation, in der nach dem zweiten unbelegten Stollen 4a wiederum einen belegter Stollen 4 in den Bereich der Sensoreinrichtung 17 läuft. Die Steuerungseinrichtung 16 erfasst diesen belegten Stollen 4 und ist nun in der Lage, den Zeitpunkt zu bestimmen, zu dem nach einer Verzögerung die Stollenrolle 6 sowie das zweite Stollenband 9 wieder mit der Soll-Geschwindigkeit weiterlaufen müssen, um eine erneute Übergabe zu ermöglichen.

Nach wie vor sind neben dem ersten Stollenband 3 auch die Stollenrolle 6 sowie das zweite Stollenband 9 mit der Soll-Geschwindigkeit in Bewegung, da nach wie vor Würste respektive belegte Stollen 4 in den Übergabebereich Ü1 einlaufen und eine Wurstübergabe möglich ist.

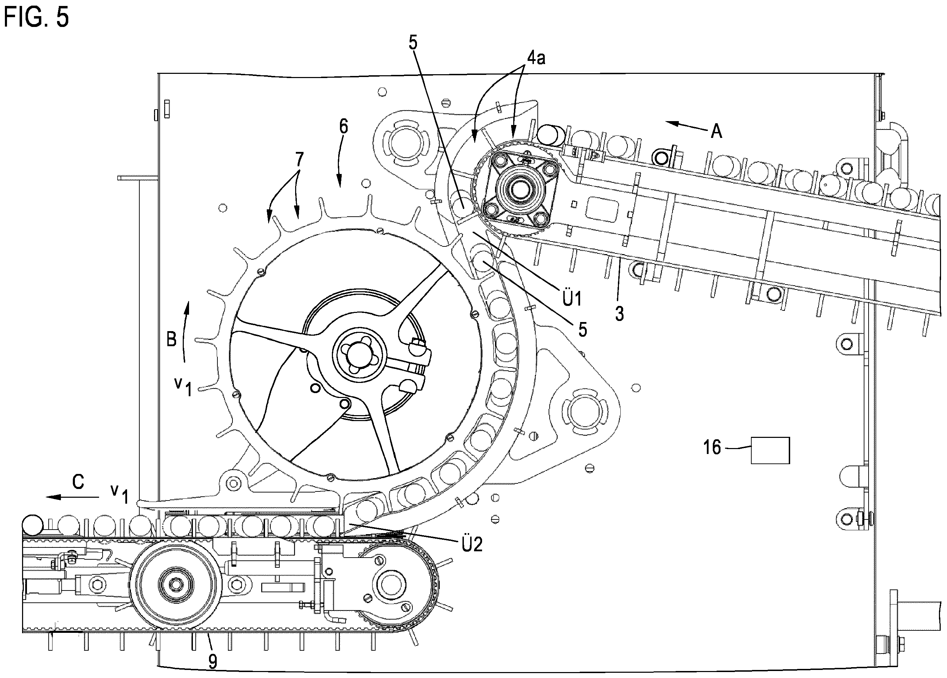

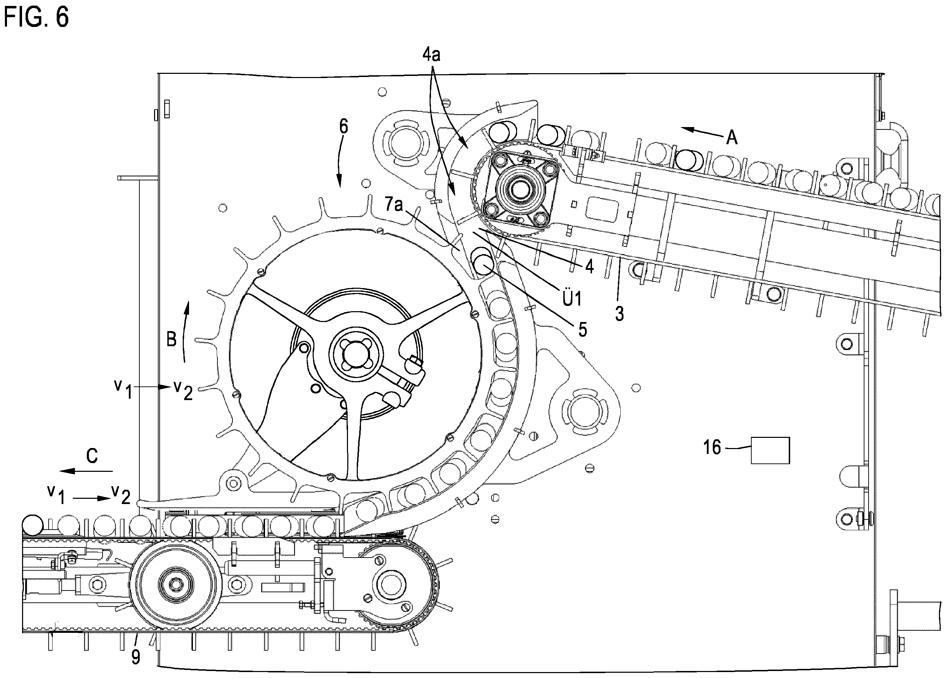

Die Figuren 4 und 5 zeigen die beiden Folgesituationen, in denen noch die restlichen, sich zwischen dem Übergabebereich Ü1 und dem ersten unbelegten Stollen 4a befindlichen Würste 5 in die Stollen 7 der Stollenrolle 6 übergeben werden, auch findet nach wie vor die Übergabe der Würste an der Übergabeposition Ü2 statt. Fig. 6 zeigt die Situation, in der gerade eine Wurst 5 aus dem letzten belegten Stollen 4 in den Stollen 7a übergeben wird, der nächstfolgende Stollen 4a ist der erste unbelegte Stollen, der als nächstes in die Übergabeposition Ü1 einläuft.

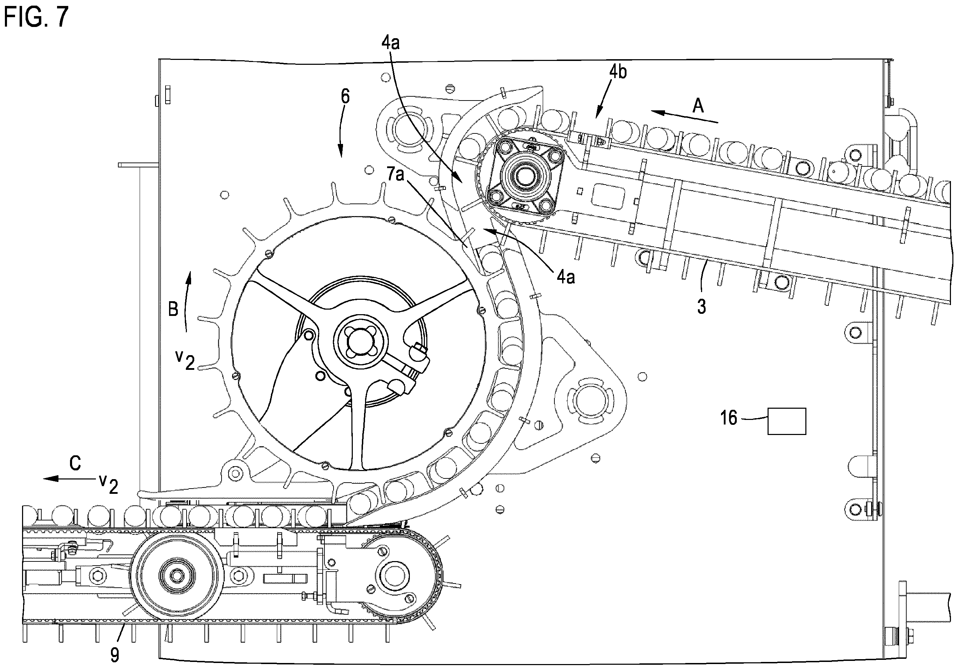

Wie beschrieben zeigt Fig. 6 die Situation, in der gerade die Wurst 5 in den Stollen 7a der Stollenrolle 6 übergeben wurde. Während die Fördergeschwindigkeit des ersten Stollenbands 3 kontinuierlich beigehalten wird, wird die Bewegung der Stollenrolle 6 sowie die Transportgeschwindigkeit des zweiten Stollenbands 9 nun temporär verzögert, die Geschwindigkeit wird von einer Soll-Geschwindigkeit v1 auf eine Geschwindigkeit v2 reduziert, wie Fig. 7 zeigt. Der Stollen 7a wandert demzufolge langsamer als die Stollen 4 respektive die beiden unbelegten Stollen 4a, des ersten Stollenbands. Fig. 7 zeigt die Situation, in der die Stollenrolle 6 langsamer weitergedreht hat, der Stollen 7a befindet sich noch benachbart zum Übergabebereich Ü1, während der erste unbelegte Stollen 4a bereits vollständig in den Übergabebereich Ü1 bewegt wurde.

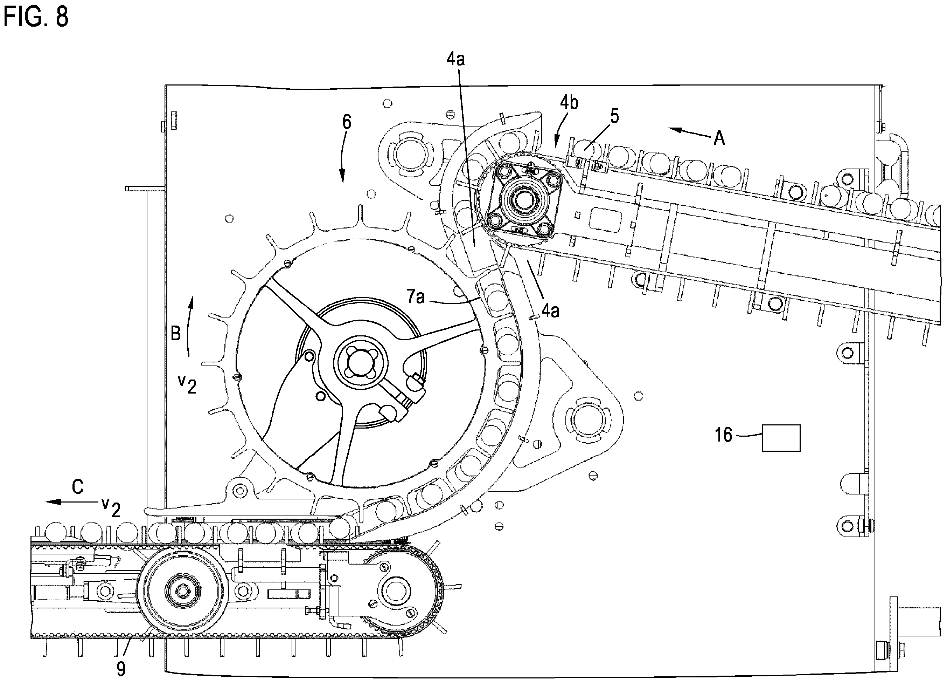

Fig. 8 zeigt die Situation, in der sich nun der zweite unbelegte Stollen 4a im Bereich der Übergabeposition Ü1 befindet, der Stollen 7a wurde aufgrund der reduzierten Geschwindigkeit v2 weniger weitbewegt.

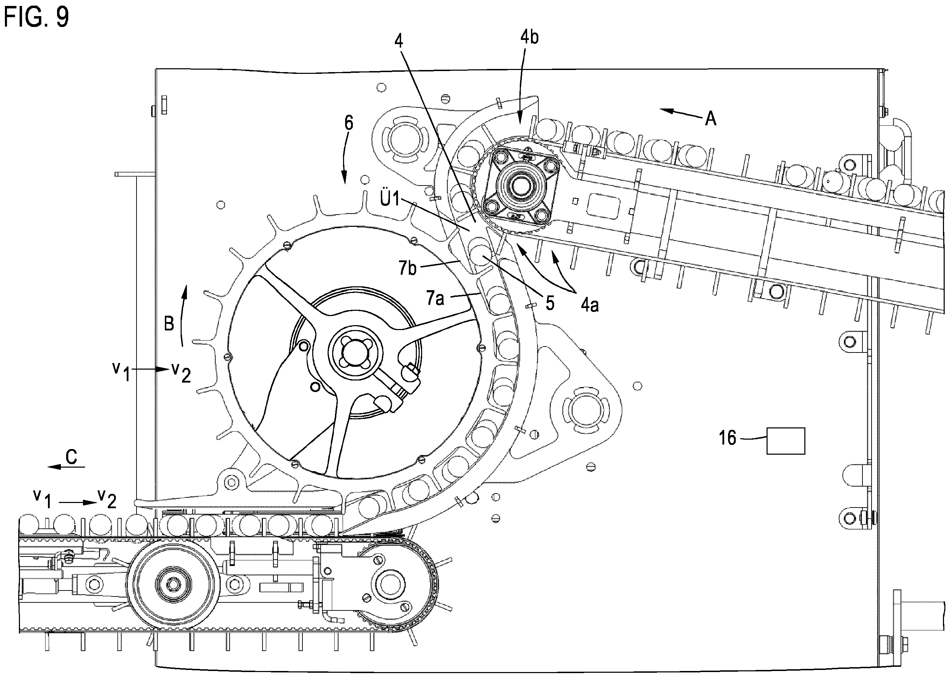

Die fortgesetzte Betriebssituation zeigt Fig. 9. In dieser wurde der nächstfolgende Stollen 7b nun in den Bereich der Übergabeposition Ü1 bewegt, in der sich nun auch der dem zweiten unbelegten Stollen 4a nächstfolgende belegte Stollen 4 befindet. Die im belegten Stollen 4 befindliche Wurst 5 wird in den Stollen 7b übergeben, es findet eine normale Übergabe statt. Zeitgleich hiermit findet wieder eine Beschleunigung statt, das heißt, dass die Geschwindigkeit wieder von v2 auf die Soll-Geschwindigkeit v1 erhöht wird, die Stollenrolle 6 und das zweite Stollenband 9 werden also wieder beschleunigt. Dies deshalb, als die beiden unbelegten Stollen 4a vorbeigelaufen sind und die nachfolgenden Stollen 4 wiederum belegt sind (was von der Steuerungseinrichtung 16 mit der Sensoreinrichtung 17 kontinuierlich erfasst wurde), so dass ein weiterer normaler Übergabevorgang erfolgen kann.

Ersichtlich sind, siehe Fig. 9, sämtliche Stollen 7, 7a, 7b an der Stollenrolle 6 belegt, die beiden Lücken in den unbelegten Stollen 4a sind demzufolge in der Wurstkette ausgeglichen.

Wie Fig. 7 zeigt, wurde während des vorstehend geschilderten Vorgangs der weitere unbelegte Stollen 4b in den Bereich der Sensoreinrichtung 17 bewegt. Die Steuerungseinrichtung 16 erfasst auch diese fehlende Belegung, wie auch erfasst wird (siehe Fig. 8), dass im nächstfolgenden belegten Stollen 4 wiederum eine Wurst 5 aufgenommen ist. Die Steuerungseinrichtung hat also erneut eine Lücke erfasst, die jedoch kürzer als die vorherige Lücke der beiden unbelegten Stollen 4a ist.

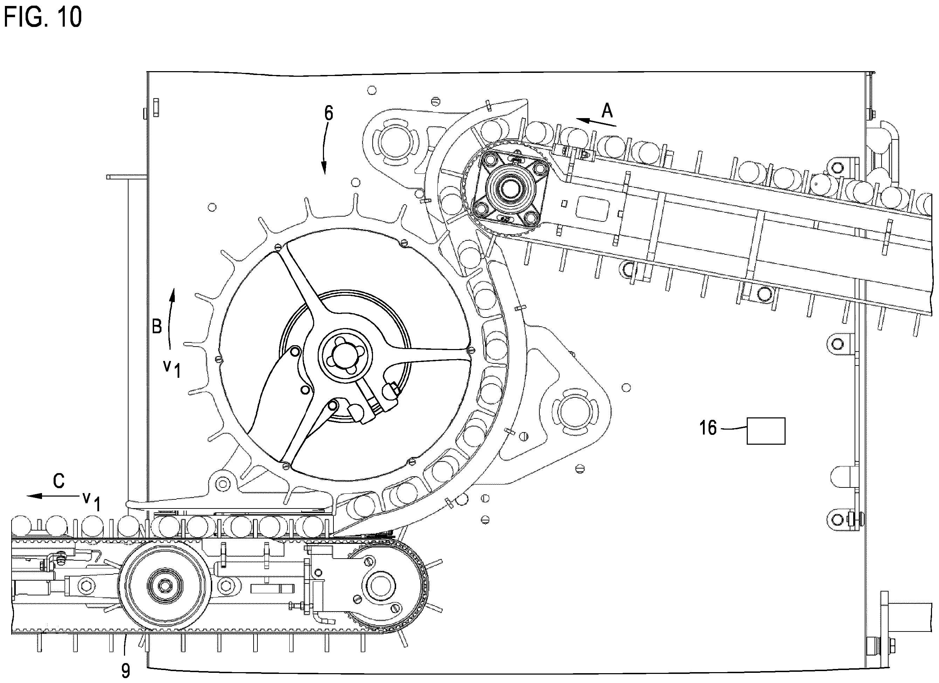

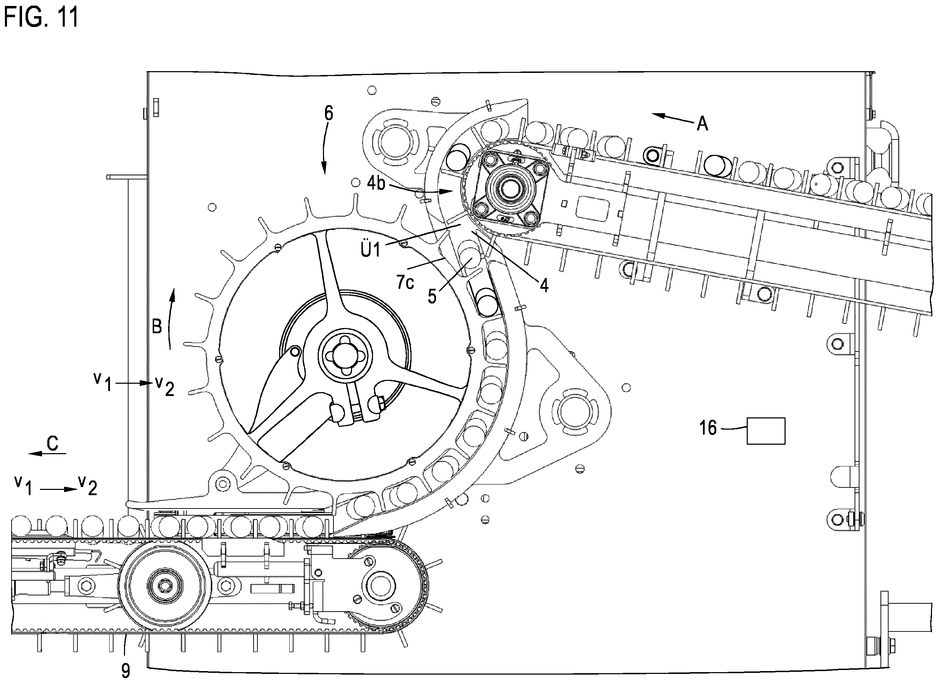

Wie Fig. 9 zeigt, befindet sich der unbelegte Stollen 4b noch beabstandet zur Übergabeposition Ü1, vor ihm sind noch zwei belegte Stollen 4. Die Stollenrolle 6 sowie das zweite Stollenband 9 laufen wieder mit normaler Geschwindigkeit v1, wie Fig. 10 zeigt, es findet der normale Übergabeprozess statt. Ebenso in Fig. 11, wo der dem unbelegten Stollen 4b vorgeschaltete belegte Stollen 4 in die Übergabeposition Ü1 bewegt wurde, die Wurst 5 wird in den Stollen 7c übergeben.

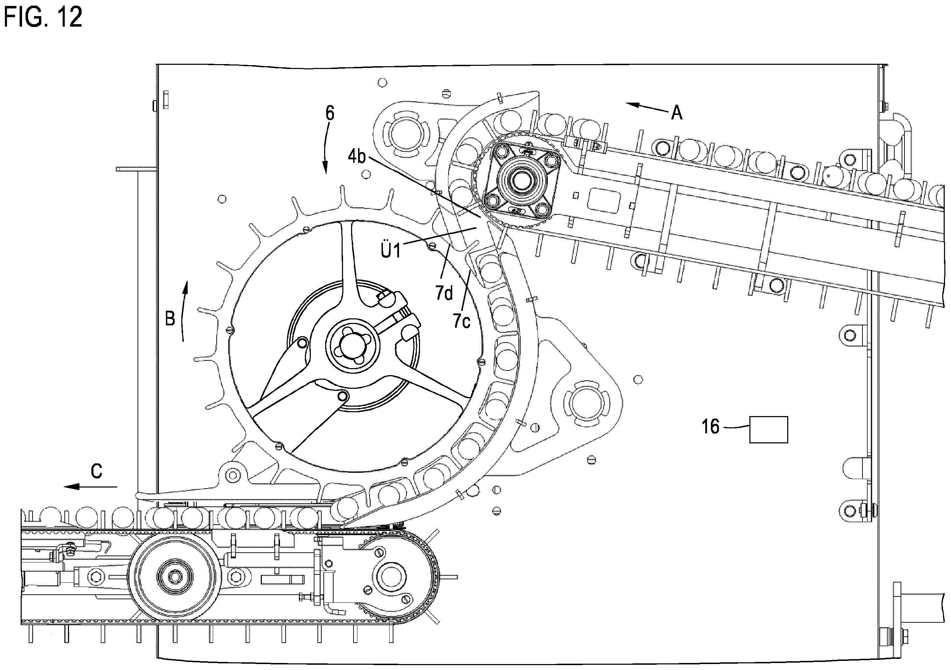

Da alst nächstes der unbelegte Stollen 4b in die Übergabeposition Ü1 einläuft, kommt es erneut zu einer Verzögerung der Bewegungsgeschwindigkeit des Stollenrades 6 sowie des zweiten Stollenbandes 9, die Geschwindigkeit beide wird wieder von v1 auf v2 reduziert, so dass der nächstfolgende Stollen 7d langsamer in den Übergabebereich Ü1 eingedreht wird als der unbelegte Stollen 4b, der, siehe Fig. 12, durch den Übergabebereich Ü1 durchläuft.

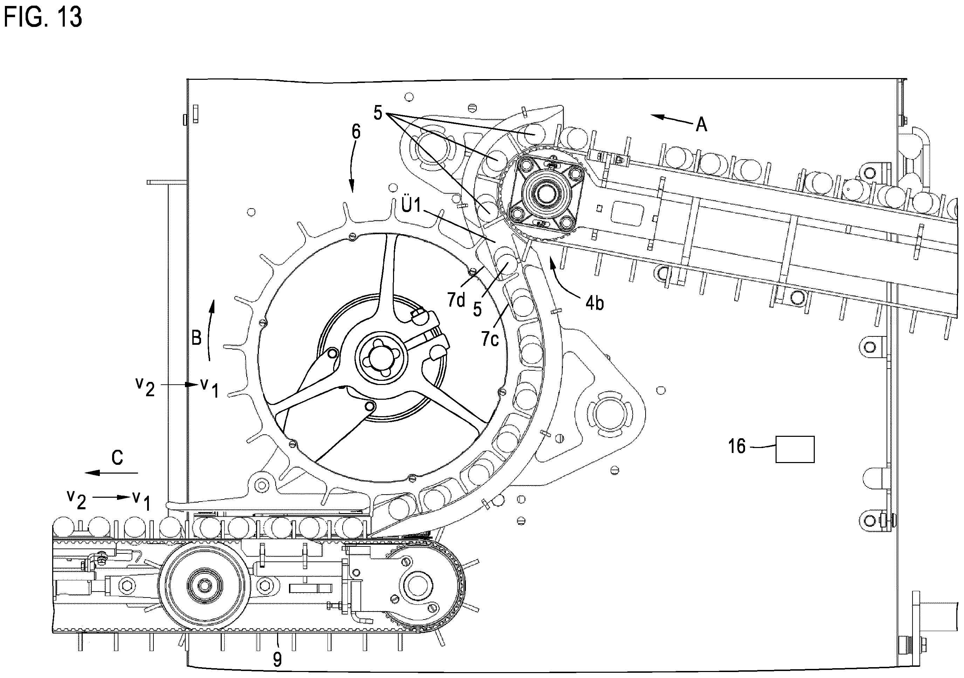

Fig. 13 zeigt schließlich die Situation, in der der unbelegte Stollen 4b über den die Übergabeposition Ü1 hinausbewegt wurde und der nächstfolgende belegte Stollen 4 in die Übergabeposition Ü1 bewegt wurde. Zeitgleich damit einhergeht auch das Einlaufen des Stollens 7d, so dass wiederum eine normale Übergabe der Wurst 5 aus dem belegten Stollen 4 in den Stollen 7d erfolgen kann. Da nun, siehe Fig. 13, wieder belegte Stollen 4 mit Würsten 5 folgen, kommt es nun wieder zu einer Beschleunigung der Stollenrolle 6 sowie des Stollenbandes 9 von der Geschwindigkeit v2 zu v1, der normale Förderbetrieb setzt sich fort, bis eine erneute Lücke in den Übergabebereich Ü1 einläuft.

Ersichtlich wurde also auch die vormals über den unbelegten Stollen 4b gegebene Lücke geschlossen, alle Stollen 7, 7a, 7b, 7c, 7d der Steuerrolle 6 sind fortlaufend belegt, es bildet sich eine kontinuierliche Wurstkette, die in dieser Form sodann auf das zweite Stollenband 9 übergeben wird, wo ebenfalls jeder Stollen 10 belegt ist.

Wenngleich die vorstehenden beschriebenen Ausführungsbeispiele die Steuerrolle 6 sowie das zweite Stollenband 9 zum Ausgleich der Lücke verzögert werden, mithin also sich während der vorbeilaufenden Stollenlücke langsamer bewegen als das erste Stollenband 3, ist es gleichermaßen denkbar, die Stollenrolle 6 sowie das zweite Stollenband 9 auch komplett zu stoppen, während der oder die unbelegten Stollen vorbeilaufen, und wieder anzufahren, wenn ein belegter Stollen in den Übergabebereich Ü1 einläuft.

Wie beschrieben ist die erfindungsgemäße Wurstbehandlungsvorrichtung Teil einer größeren Wurstbehandlungs- oder Herstellungsanlage, wie sie beispielsweise in DE 20 2015 104 994 U1 gezeigt ist. Die erfindungsgemäße Wurstbehandlungseinrichtung ersetzt die in DE 20 2015 104 994 U1 gezeigte erste Fördereinrichtung, die Gruppiereinrichtung, sowie die zweite Fördereinrichtung. Ihr vorgeschaltet ist die entsprechende Wurstbefüll- und Abdreheinrichtung sowie die Sortiereinrichtung, die zum Sortieren und Einbringen der Würste 5 in die Stollen 4 der ersten Transporteinrichtung 2, also das erste Stollenband 3, dient. Dieser nachgeschaltet ist die Transfer- oder Greifeinrichtung, gegebenenfalls mit einer vorgeschalteten Wurstausrichteinrichtung, wie sie beispielsweise in der nachveröffentlichten deutschen Patentanmeldung DE 10 2017 123 517 beschrieben ist, die dazu dient, die Krümmungen der mitunter gekrümmten Würste in gleicher Richtung auszurichten.

## Patentansprüche

1. Wurstbehandlungsvorrichtung, umfassend eine umlaufende erste Transporteinrichtung (2) in Form eines Stollenbands (3), wobei in jedem Stollen (4) eine Wurst (5) aufnehmbar ist, eine nachgeschaltete Stollenrolle (6), wobei jeweils eine Wurst (5) aus einem Stollen (4) der ersten Transporteinrichtung (2) in einen Stollen der Stollenrolle (6) übergebbar ist, sowie eine zweite umlaufende Transporteinrichtung (8), auf die die Würste (5) aus den Stollen (7, 7a, 7b, 7c, 7d) der Stollenrolle (6) übergebbar sind, eine den Förderbetrieb der zweiten Transporteinrichtung (8) und der Stollenrolle (6) steuernde Steuerungseinrichtung (16), sowie eine Sensoreinrichtung (17) zur Erfassung der Belegung der Stollen (4) der ersten Transporteinrichtung (2), wobei die Steuerungseinrichtung (16) zur Steuerung des Förderbetriebs der Stollenrolle (6) und der zweiten Transporteinrichtung (8) derart in Abhängigkeit des Erfassungsergebnisses der Sensoreinrichtung (17) eingerichtet ist, dass bei Erfassung eines oder mehrerer aufeinander folgender nicht belegter Stollen (4a, 4b) der ersten Transporteinrichtung (2) der Förderbetrieb der Stollenrolle (6) und der zweiten Transporteinrichtung (8) gestoppt oder verzögert wird, wenn sich der nicht belegte Stollen (4a, 4b) in einer Übergabeposition (Ü1) befindet oder in diese einläuft und bei Erfassung eines belegten Stollens (4) wieder aufgenommen wird, wenn sich der belegte Stollen (4) in der Übergabeposition (Ü1) befindet oder in diese einläuft.

2. Wurstbehandlungsvorrichtung nach Anspruch 1, **dadurch gekennzeichnet, dass** die zweite Transporteinrichtung (8) ein Stollenband (9) ist, wobei in jeden Stollen (10) eine Wurst (5) aus einem Stollen (7, 7a, 7b, 7c, 7d) der Stollenrolle (6) oder mehrere Würste (5) aus mehreren Stollen (7, 7a, 7b, 7c, 7d) der Stollenrolle (6) übergebbar sind.

3. Wurstbehandlungsvorrichtung nach Anspruch 1 oder 2, **dadurch gekennzeichnet, dass** die Stollenrolle (6) unterhalb des Endes des ersten Stollenbands (3) und der Anfang der zweiten Transporteinrichtung (8), insbesondere des zweiten Stollenbands (9) unterhalb der Stollenrolle (6) ist, wobei eine das Ende des ersten Stollenbands (3) umgreifende und sich in den Bereich der oberen Übergabeposition (Ü1) erstreckende erste Führungseinrichtung (11) und eine die Stollenrolle (6) im Bereich zwischen der oberen Übergabeposition (Ü1) und der unteren Übergabeposition (Ü2) von der Stollenrolle (6) zur zweiten Transporteinrichtung (8), insbesondere dem zweiten Stollenband (9) umgreifenden zweite Führungseinrichtung (12) vorgesehen ist.

4. Wurstbehandlungsvorrichtung nach einem der vorangehenden Ansprüche, **dadurch gekennzeichnet, dass** die Sensoreinrichtung (17) vor der Übergabeposition (Ü1) positioniert ist.

5. Wurstbehandlungsvorrichtung nach einem der vorangehenden Ansprüche, **dadurch gekennzeichnet, dass** die Sensoreinrichtung (17) ein lichtoptischer Sensor, eine Kamera oder ein mechanischer Sensor ist.

6. Verfahren zum Handhaben von Würsten unter Verwendung einer Wurstbehandlungsvorrichtung (1) nach einem der vorangehenden Ansprüche, **dadurch gekennzeichnet, dass** bei Erfassung eines oder mehrerer aufeinander folgender nicht belegter Stollen (4a, 4b) der ersten Transporteinrichtung (2) der Förderbetrieb der Stollenrolle (6) und der zweiten Transporteinrichtung (8) gestoppt oder verzögert wird, wenn sich der nicht belegte Stollen (4a, 4b) in einer Übergabeposition (Ü1) befindet oder in diese einläuft und bei Erfassung eines belegten Stollens (4) wieder aufgenommen wird, wenn sich der belegte Stollen (4) in der Übergabeposition (Ü1) befindet oder in diese einläuft.

7. Verfahren nach Anspruch 6, **dadurch gekennzeichnet, dass** die zweite Transporteinrichtung (8) ein Stollenband (9) ist, wobei in jeden Stollen (10) eine Wurst (5) aus einem Stollen (7, 7a, 7b, 7c, 7d) der Stollenrolle (6) oder mehrere Würste aus mehreren Stollen (7, 7a, 7b, 7c, 7d) der Stollenrolle (6) übergeben werden.

8. Verfahren nach Anspruch 6 oder 7, **dadurch gekennzeichnet, dass** die Erfassung der Stollenbelegung an einer der Übergabeposition (Ü1) vorgelagerten Position erfolgt, wobei die Steuerungseinrichtung (16) bei Erfassung eines nicht belegten Stollens (4) den Stoppzeitpunkt und den Startzeitpunkt oder die Verzögerungsdauer in Abhängigkeit der Fördergeschwindigkeit bestimmt.

9. Verfahren nach einem der Ansprüche 6 bis 8, **dadurch gekennzeichnet, dass** die Würste (5) von dem ersten Stollenband (3) auf die unterhalb des Endes des ersten Stollenbands (3) angeordnete Stollenrolle (6) übergeben werden und die Würste (5) von der Stollenrolle (6) auf den unterhalb davon angeordneten Anfang der zweiten Transporteinrichtung (8), insbesondere des zweiten Stollenbands (9) übergeben werden, wobei die Würste (5) mittels einer das Ende des ersten Stollenbands (3) umgreifenden und sich in den Bereich der oberen Übergabeposition (Ü1) erstreckenden erste Führungseinrichtung (11) und einer die Stollenrolle (6) im Bereich zwischen der oberen Übergabeposition (Ü1) und der unteren Übergabeposition (Ü2) von der Stollenrolle (6) zur zweiten Transporteinrichtung (8), insbesondere dem zweiten Stollenband (9) umgreifenden zweite Führungseinrichtung (12) geführt werden.

10. Verfahren nach einem der Ansprüche 6 bis 9, **dadurch gekennzeichnet, dass** die Stollenbelegung mittels eines lichtoptischen Sensors (17), einer Kamera oder eines mechanischen Sensors, der oder die mit der Steuerungseinrichtung (16) kommuniziert, erfasst wird.

## Claims

1. Sausage processing apparatus, comprising a circulating first transport device (2) in the form of a compartmented belt (3), wherein a sausage (5) can be received in each compartment (4), a downstream compartmented roller (6), wherein in each case one sausage (5) can be transferred from a compartment (4) of the first transport device (2) into a compartment of the compartmented roller (6), and a second circulating transport device (8), onto which the sausages (5) can be transferred from the compartments (7, 7a, 7b, 7c, 7d) of the compartmented roller (6), a control device (16) which controls the conveying operation of the second transport device (8) and of the compartmented roller (6), and a sensor device (17) for detecting the occupancy of the compartments (4) of the first transport device (2), wherein the control device (16) is configured to control the conveying operation of the compartmented roller (6) and of the second transport device (8) in a manner dependent on the detection result of the sensor device (17) such that, upon detection of one or more successive unoccupied compartments (4a, 4b) of the first transport device (2), the conveying operation of the compartmented roller (6) and of the second transport device (8) is stopped or slowed when the unoccupied compartment (4a, 4b) is situated in or is entering a transfer position (Ü1) and, upon detection of an occupied compartment (4), said conveying operation is resumed when the occupied compartment (4) is situated in or is entering the transfer position (Ü1).

2. Sausage processing apparatus according to Claim 1, **characterized in that** the second transport device (8) is a compartmented belt (9), wherein one sausage (5) from one compartment (7, 7a, 7b, 7c, 7d) of the compartmented roller (6) or multiple sausages (5) from multiple compartments (7, 7a, 7b, 7c, 7d) of the compartmented roller (6) can be transferred into each compartment (10).

3. Sausage processing apparatus according to Claim 1 or 2, **characterized in that** the compartmented roller (6) is below the end of the first compartmented belt (3) and the start of the second transport device (8), in particular of the second compartmented belt (9), is below the compartmented roller (6), wherein a first guide device (11) is provided which engages around the end of the first compartmented belt (3) and which extends into the region of the upper transfer position (Ü1), and a second guide device (12) is provided which engages around the compartmented roller (6) in the region between the upper transfer position (Ü1) and the lower transfer position (U2) from the compartmented roller (6) to the second transport device (8), in particular the second compartmented belt (9).

4. Sausage processing apparatus according to any of the preceding claims, **characterized in that** the sensor device (17) is positioned upstream of the transfer position (Ü1) .

5. Sausage processing apparatus according to any of the preceding claims, **characterized in that** the sensor device (17) is a photo-optical sensor, a camera or a mechanical sensor.

6. Method for treating sausages using a sausage processing apparatus (1) according to any of the preceding claims, **characterized in that**, upon detection of one or more successive unoccupied compartments (4a, 4b) of the first transport device (2), the conveying operation of the compartmented roller (6) and of the second transport device (8) is stopped or slowed when the unoccupied compartment (4a, 4b) is situated in or is entering a transfer position (Ü1) and, upon detection of an occupied compartment (4), said conveying operation is resumed when the occupied compartment (4) is situated in or is entering the transfer position (Ü1).

7. Method according to Claim 6, **characterized in that** the second transport device (8) is a compartmented belt (9), wherein one sausage (5) from one compartment (7, 7a, 7b, 7c, 7d) of the compartmented roller (6) or multiple sausages from multiple compartments (7, 7a, 7b, 7c, 7d) of the compartmented roller (6) are transferred into each compartment (10).

8. Method according to Claim 6 or 7, **characterized in that** the detection of the compartment occupancy is performed at a position upstream of the transfer position (Ü1), wherein the control device (16), upon detection of an unoccupied compartment (4), determines the stopping time and the starting time or the slowing duration in a manner dependent on the conveying speed.

9. Method according to any of Claims 6 to 8, **characterized in that** the sausages (5) are transferred from the first compartmented belt (3) to the compartmented roller (6) arranged below the end of the first compartmented belt (3), and the sausages (5) are transferred from the compartmented roller (6) to the start, arranged below said compartmented roller (6), of the second transport device (8), in particular of the second compartmented belt (9), wherein the sausages (5) are guided by a first guide device (11), which engages around the end of the first compartmented belt (3) and which extends into the region of the upper transfer position (Ü1), and by a second guide device (12), which engages around the compartmented roller (6) in the region between the upper transfer position (Ü1) and the lower transfer position (U2) from the compartmented roller (6) to the second transport device (8), in particular the second compartmented belt (9).

10. Method according to any of Claims 6 to 9, **characterized in that** the compartment occupancy is detected by means of a photo-optical sensor (17), a camera or a mechanical sensor, which communicates with the control device (16).

## Revendications

1. Dispositif de traitement de saucisses, comprenant un premier moyen de transport tournant (2) sous la forme d'une bande compartimentée (3), dans lequel chaque compartiment (4) peut recevoir une saucisse (5), un cylindre compartimenté (6) placé en aval, dans lequel respectivement une saucisse (5) peut être transférée d'un compartiment (4) du premier moyen de transport (2) à un compartiment du cylindre compartimenté (6), ainsi qu'un deuxième moyen de transport tournant (8) sur lequel les saucisses (5) provenant des compartiments (7, 7a, 7b, 7c, 7d) peuvent être transférées au cylindre compartimenté (6), un moyen de commande (16) commandant le transport continu du deuxième moyen de transport (8) et du cylindre compartimenté (6), ainsi qu'un moyen de capteur (17) pour détecter l'occupation des compartiments (4) du premier moyen de transport (2), dans lequel le moyen de commande (16) est conçu pour commander le transport continu du cylindre compartimenté (6) et du deuxième moyen de transport (8) en fonction du résultat de détection du moyen de capteur (17) de telle sorte que lorsqu'un ou plusieurs compartiments (4a, 4b) non occupés successifs du premier moyen de transport (2) sont détectés, le transport continu du cylindre compartimenté (6) et du deuxième moyen de transport (8) est arrêté ou retardé si le compartiment (4a, 4b) non occupé se trouve ou entre dans une position de transfert (Ü1), et reprend lorsqu'un compartiment occupé (4) est détecté si le compartiment occupé (4) se trouve ou entre dans la position de transfert (Ü1).

2. Dispositif de traitement de saucisses selon la revendication 1, **caractérisé en ce que** le deuxième moyen de transport (8) est une bande compartimentée (9), dans lequel une saucisse (5) provenant d'un compartiment (7, 7a, 7b, 7c, 7d) du cylindre compartimenté (6) ou plusieurs saucisses (5) provenant de plusieurs compartiments (7, 7a, 7b, 7c, 7d) du cylindre compartimenté (6) peuvent être transférées dans chaque compartiment (10).

3. Dispositif de traitement de saucisses selon la revendication 1 ou 2, **caractérisé en ce que** le cylindre compartimenté (6) se trouve au-dessous de l'extrémité de la première bande compartimentée (3), et le début du deuxième moyen de transport (8), en particulier de la deuxième bande compartimentée (9), se trouve au-dessous du cylindre compartimenté (6), dans lequel un premier moyen de guidage (11) entourant l'extrémité de la première bande compartimentée (3) et s'étendant dans la zone de la position de transfert supérieure (Ü1) et un deuxième moyen de guidage (12) entourant le cylindre compartimenté (6) dans la zone entre la position de transfert supérieure (Ü1) et la position de transfert inférieure (Ü2) du cylindre compartimenté (6) au deuxième moyen de transport (8), en particulier de la deuxième bande compartimentée (9), sont prévus.

4. Dispositif de traitement de saucisses selon l'une quelconque des revendications précédentes, **caractérisé en ce que** le moyen de capteur (17) est positionné devant la position de transfert (Ü1).

5. Dispositif de traitement de saucisses selon l'une quelconque des revendications précédentes, **caractérisé en ce que** le moyen de capteur (17) est un capteur optique, une caméra ou un capteur mécanique.

6. Procédé permettant de manipuler des saucisses en utilisant un dispositif de traitement de saucisses (1) selon l'une quelconque des revendications précédentes, **caractérisé en ce que** lorsqu'un ou plusieurs compartiments (4a, 4b) non occupés successifs du premier moyen de transport (2) sont détectés, le transport continu du cylindre compartimenté (6) et du deuxième moyen de transport (8) est arrêté ou retardé si le compartiment (4a, 4b) non occupé se trouve ou entre dans une position de transfert, et reprend lorsqu'un compartiment occupé (4) est détecté si le compartiment occupé (4) se trouve ou entre dans la position de transfert (Ü1).

7. Procédé selon la revendication 6, **caractérisé en ce que** le deuxième moyen de transport (8) est une bande compartimentée (9), dans lequel une saucisse (5) provenant d'un compartiment (7, 7a, 7b, 7c, 7d) du cylindre compartimenté (6) ou plusieurs saucisses (5) provenant de plusieurs compartiments (7, 7a, 7b, 7c, 7d) du cylindre compartimenté (6) peuvent être transférées dans chaque compartiment (10).

8. Procédé selon la revendication 6 ou 7, **caractérisé en ce que** la détection de l'occupation des compartiments est effectuée dans une position en amont de la position de transfert (Ü1), dans lequel le moyen de commande (16), lors d'une détection d'un compartiment (4) non occupé, détermine le temps d'arrêt et le temps de démarrage ou la durée de retard en fonction de la vitesse de transport.

9. Procédé selon l'une quelconque des revendications 6 à 8, **caractérisé en ce que** les saucisses (5) de la première bande compartimentée (3) sont transférées au cylindre compartimenté (6) disposé au-dessous de l'extrémité de la première bande compartimentée (3), et les saucisses (5) sont transférées du cylindre compartimenté (6) au début du deuxième moyen de transport (8), disposé au-dessous de celui-ci, en particulier de la deuxième bande compartimentée (9), dans lequel les saucisses (5) sont guidées au moyen d'un premier dispositif de guidage (11) entourant l'extrémité de la première bande compartimentée (3) et s'étendant dans la zone de la position de transfert supérieure (Ü1) et d'un deuxième moyen de guidage (12) entourant le cylindre compartimenté (6) dans la zone entre la position de transfert supérieure (Ü1) et la position de transfert inférieure (Ü2) du cylindre compartimenté (6) vers le deuxième moyen de transport (8), en particulier la deuxième bande compartimentée (9) .

10. Procédé selon l'une quelconque des revendications 6 à 9, **caractérisé en ce que** l'occupation des compartiments est détectée au moyen d'un capteur optique (17), d'une caméra ou d'un capteur mécanique qui communique avec le moyen de commande (16).
